(19) Europäisches Patentamt
European Patent Office
Office européen des brevets

(11) Veröffentlichungsnummer: **0 499 845 B1**

# (12) EUROPÄISCHE PATENTSCHRIFT

(45) Veröffentlichungstag der Patentschrift: **13.12.95**

(51) Int. Cl.[6]: **C09B 29/085**, C10L 1/00, C10L 1/22

(21) Anmeldenummer: **92101432.0**

(22) Anmeldetag: **29.01.92**

## (54) Öllösliche Phenylazoanilinfarbstoffe

(30) Priorität: **22.02.91 DE 4105603**

(43) Veröffentlichungstag der Anmeldung:
**26.08.92 Patentblatt 92/35**

(45) Bekanntmachung des Hinweises auf die Patenterteilung:
**13.12.95 Patentblatt 95/50**

(84) Benannte Vertragsstaaten:
**AT BE CH DE ES FR GB IT LI NL SE**

(56) Entgegenhaltungen:
**EP-A- 0 256 460**
**FR-A- 2 232 636**

**CHEMICAL ABSTRACTS, vol. 111, no. 24, 11. Dezember 1989, Columbus, Ohio, US; abstract no. 215880H, H.S.FREEMAN ET AL.: 'photolitic properties of ortho- substituted 4-[N,N-bis(beta-hydroxyethyl)amino]azobenzenes in polymer substrates.' Seite 74 ;**

**CHEMICAL ABSTRACTS, vol. 100, no. 26, Juni 1984, Columbus, Ohio, US; abstract**

**no. 211527Y, T.MISONO ET AL.: 'study on dyeing of polyester fiber with disperse azo dyes. IV. ...' Seite 75 ;**

**CHEMICAL ABSTRACTS, vol. 95, no. 16, Oktober 1981, Columbus, Ohio, US; abstract no. 134254F, T. MISONO ET AL.: 'studies on dyeing of polyester fiber with disperse azo dyes. II. ...' Seite 66 ;**

**DIN 51631:"Siedegrenzenbenzine"**

(73) Patentinhaber: **BASF Aktiengesellschaft**
**Carl-Bosch-Strasse 38**
**D-67063 Ludwigshafen (DE)**

(72) Erfinder: **Reichelt, Helmut, Dr.**
**Johann-Gottlieb-Fichte-Strasse 56**
**W-6730 Neustadt (DE)**
Erfinder: **Vamvakaris, Christos, Dr.**
**Riedweg 6**
**W-6701 Kallstadt (DE)**
Erfinder: **Zeidler, Georg**
**Mutterstadter Strasse 7**
**W-6701 Dannstadt-Schauernheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft neue Azofarbstoffe der Formel I

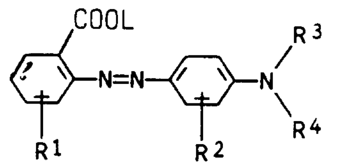

(I),

in der

$R^1$ und $R^2$ gleich oder verschieden sind und unabhängig voneinander jeweils Wasserstoff, $C_1$-$C_4$-Alkyl oder $C_1$-$C_4$-Alkoxy,

$R^3$ Wasserstoff oder $C_1$-$C_8$-Alkyl, das gegebenenfalls durch Hydroxy substituiert ist und durch 1 bis 3 Sauerstoffatome in Etherfunktion unterbrochen sein kann,

$R^4$ $C_1$-$C_8$-Alkyl, das gegebenenfalls durch Hydroxy substituiert ist und durch 1 bis 3 Sauerstoffatome in Etherfunktion unterbrochen sein kann, und

L Wasserstoff oder $C_1$-$C_8$-Alkyl, das gegebenenfalls durch Hydroxy substituiert ist und durch 1 bis 3 Sauerstoffatome in Etherfunktion unterbrochen sein kann, bedeuten

mit der Maßgabe, daß mindestens einer der Reste $R^3$, $R^4$ oder L durch Hydroxy substituiert ist, Mineralöle, enthaltend die neuen Farbstoffe sowie die Verwendung der neuen Farbstoffe zum Markieren von Mineralölen.

In der älteren Patentanmeldung EP-A-419 976 sind Azofarbstoffe beschrieben, deren Diazo- und Kupplungskomponente aus der Anilinreihe stammen. Diese Farbstoffe verfügen jedoch nicht über eine Cyano- oder Carbonestergruppe.

Aus der FR-A- 2 232 636 sind Azofarbstoffe mit einer Diazokomponente aus der Reihe der Aminobenzoesäureester und einer Kupplungskomponente aus der Anilinreihe bekannt. Diese Farbstoffe werden zum Färben von Polyestern aus Lösungen verwendet.

Aufgabe der vorliegenden Erfindung war es, neue Azofarbstoffe bereitzustellen, deren Diazokomponente und Kupplungskomponente beide aus der Anilinreihe stammen und wobei der Rest der Diazokomponente sich von einem Aminobenzoesäurederivat ableiten sollte. Diese Farbstoffe sollten sich dabei auf vorteilhafte Weise zum Markieren von Mineralölen eignen.

Demgemäß wurden die eingangs näher bezeichneten Azofarbstoffe der Formel I gefunden.

Alle in der obengenannten Formel I auftretenden Alkylgruppen können sowohl geradkettig als auch verzweigt sein.

Reste $R^1$, $R^2$, $R^3$, $R^4$ und L sind z.B. Methyl, Ethyl, Propyl, Isopropyl, Butyl, Isobutyl, sec-Butyl oder tert-Butyl.

Reste $R^1$ und $R^2$ sind weiterhin z.B. Methoxy, Ethoxy, Propoxy, Isopropoxy, Butoxy, Isobutoxy oder sec-Butoxy.

Reste $R^3$, $R^4$ und L sind weiterhin z.B. Pentyl, Isopentyl, Neopentyl, tert-Pentyl, Hexyl, Heptyl, Octyl, 2-Ethylhexyl, 2-Hydroxyethyl, 2- oder 3-Hydroxypropyl, 3-Hydroxprop-2-yl, 2-Hydroxybutyl, 4-Hydroxybutyl, 1-Hydroxybut-2-yl, 3-Hydroxybut-2-yl, 3-Hydroxybutyl, 5-Hydroxy-3-oxapentyl, 2,5-Diethyl-5-hydroxy-3-oxapentyl oder 8-Hydroxy-3,6-dioxaoctyl.

Wenn in Formel I Alkylreste auftreten, die durch Sauerstoffatome unterbrochen sind, sind solche Alkylreste bevorzugt, die durch ein oder zwei Sauerstoffatome, insbesondere ein Sauerstoffatom unterbrochen sind.

Bevorzugt sind Azofarbstoffe der Formel I, in der

$R^1$ Wasserstoff,

$R^2$ Wasserstoff, Methyl oder Methoxy,

$R^3$ $C_1$-$C_4$-Alkyl und

$R^4$ $C_2$-$C_4$-Alkyl, das durch Hydroxy substituiert ist, bedeuten.

Insbesondere bevorzugt sind Azofarbstoffe der Formel I, in der L $C_1$-$C_8$-Alkyl, insbesondere $C_1$-$C_4$-Alkyl bedeutet, wobei Methyl und Ethyl besondere Bedeutung zukommt.

Insbesondere bevorzugt sind weiterhin Azofarbstoffe der Formel I, in der $R^1$ und $R^2$ jeweils Wasserstoff bedeuten.

Ganz besonders hervorzuheben sind Azofarbstoffe der Formel I, in der $R^3$ Ethyl und $R^4$ 2-Hydroxylbutyl, 1-Hydroxybut-2-yl oder 3-Hydroxybut-2-yl, oder in der $R^3$ n-Butyl und $R^4$ 2-Hydroxyethyl bedeuten.

Die erfindungsgemäßen Azofarbstoffe der Formel I können nach an sich bekannten Methoden erhalten werden. Beispielsweise kann man ein Aminobenzoesäurederivat der Formel II

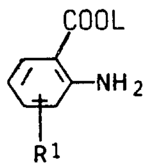 (II),

in der L und $R^1$ jeweils die obengenannte Bedeutung besitzen, auf an sich bekanntem Wege diazotieren und anschließend mit einem N-Alkylanilin der Formel III

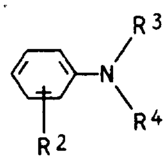 (III),

in der $R^2$, $R^3$ und $R^4$ jeweils die obengenannte Bedeutung besitzen, kuppeln.

Die Aminobenzoesäurederivate II und N-Alkylaniline III sind größtenteils an sich bekannt oder können nach an sich bekannten Methoden erhalten werden.

Beispielsweise kann man Aminoverbindungen der Formel IV

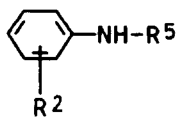 (IV),

in der $R^2$ die obengenannte Bedeutung besitzt und $R^5$ Wasserstoff oder $C_1$-$C_8$-Alkyl bedeutet, mit Ethylenoxid, Propylenoxid oder 1,2- oder 2,3-Butylenoxid oxalkylieren. Die Oxalkylierung kann z.B. in Substanz oder in Gegenwart von wenig Wasser oder von wenig wäßriger Essigsäure bei einer Temperatur, die im allgemeinen bei 80 bis 100 °C liegt, erfolgen. Das Molverhältnis Aminoverbindung IV: Alkylenoxid beträgt in der Regel 1:1 bis 1:2.

Wenn der 3-Hydroxypropyl- oder 4-Hydroxybutylrest eingeführt werden soll, besteht beispielsweise die Möglichkeit, die Aminoverbindung IV mit 3-Chlorpropanol, 3-Chlorpropylacetat, 4-Chlorbutanol oder 4-Chlorbutylacetat umzusetzen. Im Falle der Verwendung der Ester, werden diese nach Reaktion mit der Aminoverbindung IV verseift.

Die neuen Azofarbstoffe der Formel I weisen eine sehr gute Löslichkeit in organischen Lösungsmitteln, insbesondere in aromatischen oder aliphatischen Kohlenwasserstoffen auf.

Sie können in vorteilhafter Weise zum Markieren von Mineralölen verwendet werden. Demgemäß sind Mineralöle, enthaltend einen oder mehrere Azofarbstoffe der Formel I, ein weiterer Gegenstand der Erfindung.

Unter Mineralölen im erfindungsgemäßen Sinn sind beispielsweise Treibstoffe, wie Benzin, Kerosin oder Dieselöl, oder Öle, wie Heizöl oder Motorenöl, zu verstehen.

Die erfindungsgemäßen Farbstoffe eignen sich insbesondere zum Markieren von Mineralölen, bei denen gleichzeitig eine Kennzeichnung gefordert wird, z.B. aus steuerlichen Gründen. Um die Kosten der Kennzeichnung gering zu halten, strebt man an, für die Färbung möglichst ausgiebige Farbstoffe zu verwenden. Jedoch sind selbst sogenannte farbstarke Farbstoffe in hoher Verdünnung in Mineralölen rein visuell nicht mehr wahrnehmbar.

Die neuen Azofarbstoffe sind insbesondere deswegen als Kennzeichnungssubstanz geeignet, weil sie mit wäßrigen oder wäßrig-alkoholischen Säuren eine intensive Färbung ergeben, d.h. sie weisen eine hohe Farbstärke auf. Dieses Verhalten ist überraschend, da aus der EP-A-256 460 bekannt ist, daß nur solche Verbindungen als Markierungsmittel dienen, die eine acetalisierte Hydroxyalkylgruppe an der Kupplungskomponente aufweisen.

Zum Markieren von Mineralöl werden die erfindungsgemäßen Farbstoffe im allgemeinen in Form von Lösungen angewandt. Als Lösungsmittel eignen sich vorzugsweise aromatische Kohlenwasserstoffe, wie

Toluol oder Xylol. Um eine zu hohe Viskosität der resultierenden Lösungen zu vermeiden, wählt man im allgemeinen eine Konzentration an Farbstoff von 30 bis 50 Gew.%, bezogen auf die Lösung.

Mittels der erfindungsgemäßen Farbstoffe gelingt es sehr einfach, markierte Mineralöle nachzuweisen, selbst wenn die Markierungssubstanzen nur in einer Konzentration von ungefähr 0,1 ppm vorliegen. Von besonderer Bedeutung ist dabei die einfache Durchführung des Tests zum Nachweis der erfindungsgemäßen Farbstoffe. Es genügt in der Regel, eine Menge von ungefähr 100 ml des zu prüfenden Mineralöls mit 10 ml der wäßrigen Säure auszuschütteln, um die Farbreaktion zu erhalten.

Als Säuren zur Durchführung der Farbreaktion eignen sich vorwiegend wäßrige Mineralsäuren, z.B. Salzsäure oder Schwefelsäure, oder aber wäßrig-alkoholische (zweckmäßig ethanolische) Salzsäure in einer Konzentration von ungefähr 3 bis 20 Gew.%, vorzugsweise 5 bis 10 Gew.%.

Die folgenden Beispiele sollen die Erfindung näher erläutern.

Beispiel 1

15 g Anthranilsäuremethylester und 0,3 g eines anionischen Tensids wurden in einer Mischung aus 50 ml Wasser, 60 ml Toluol und 50 ml 5n-Salzsäure bei Raumtemperatur emulgiert und nach Zugabe von 100 g Eis mit einer konzentrierten wäßrigen Lösung von 6,9 g Natriumnitrit versetzt. Die Diazotierung war im Verlauf von 30 Minuten bei 0 bis 5 °C beendet; man entfernte darauf den Nitritüberschuß mit Amidosulfonsäure. Zur Lösung des Diazoniumsalzes tropfte man anschließend bei 10 bis 15 °C unter intensivem Rühren eine Lösung von 17,3 g N-Ethyl-N-(2-hydroxyethyl)anilin in 125 ml Toluol zu. Anschließend wurde der pH-Wert des Reaktionsgemisches mit 2,5n-Natriumacetatlösung auf ca. 4 erhöht. Die Kupplung war nach Rühren über Nacht im unveränderten pH-Bereich bei 15 bis 20 °C beendet. Nachdem durch mehrmaliges Waschen mit Wasser bei 60 °C die organische Phase salzfrei war, erhielt man aus dieser nach dem Abdestilieren des Toluols ca. 40 g eines ölartigen Farbstoffs der Formel

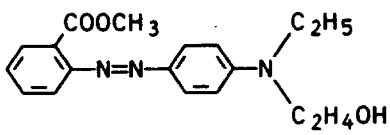 ,

der sich mit oranger Farbe gut in Aromaten löst ($\lambda_{max}$ (Toluol): 416 nm).

Die in der folgenden Tabelle aufgeführten Farbstoffe werden in analoger Weise erhalten.

| Beispiel Nr. | Farbstoff | Farbton in Aromaten | $\lambda_{max}$ [nm] (Toluol) |
|---|---|---|---|
| 2 | 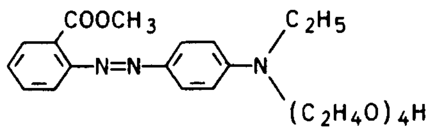 | orange | 417 |
| 3 | 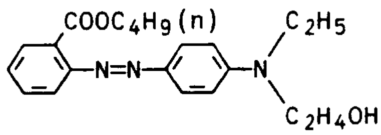 | orange | 414 |
| 4 | 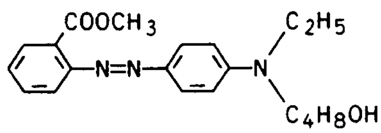 | orange | 417 |
| 5 | 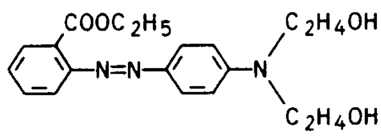 | orange | 415 |
| 6 | 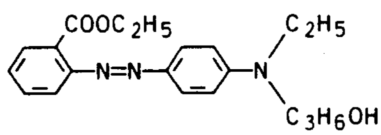 | orange | 420 |
| 7 | 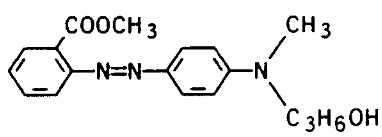 | orange | 412 |
| 8 | 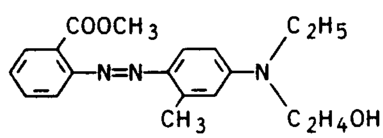 | orange | 417 |
| 9 | 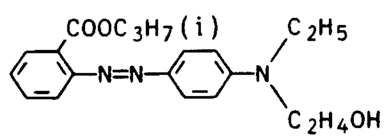 | orange | 415 |

| Beispiel Nr. | Farbstoff | Farbton in Aromaten | $\lambda_{max}$ [nm] (Toluol) |
|---|---|---|---|
| 10 | 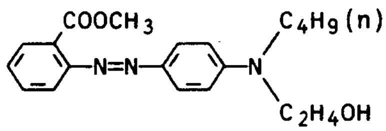 | orange | 412 |
| 11 | 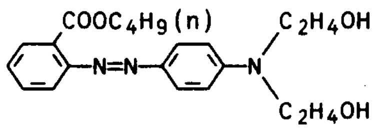 | orange | 410 |
| 12 | 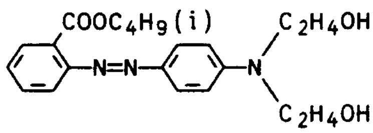 | orange | 410 |
| 13 | 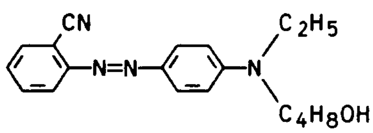 | orange | 415 |
| 14 | 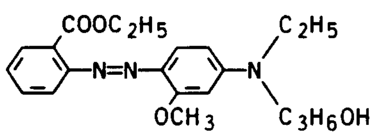 | orange | 413 |
| 15 | 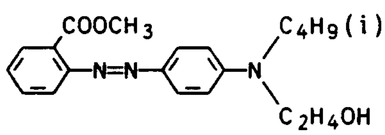 | orange | 415 |
| 16 | 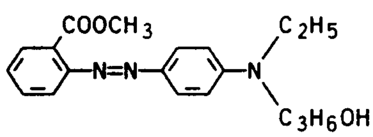 | orange | 412 |
| 17 | 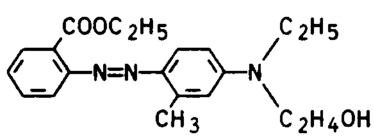 | orange | 410 |

| Beispiel Nr. | Farbstoff | Farbton in Aromaten | $\lambda_{max}$ [nm] (Toluol) |
|---|---|---|---|
| 18 | 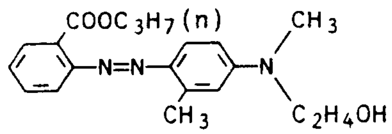 | orange | 415 |
| 19 | 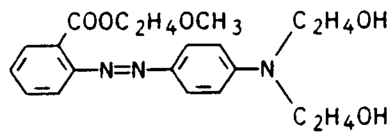 | orange | 412 |

Beispiel 20 (Anwendung)

Unverbleiter Vergasertreibstoff wurde mit einer 60 gew.-%igen Lösung des Farbstoffs gemäß Beispiel Nr. 1 in Xylol markiert.

Der Zusatz betrug 15 mg der genannten Lösung pro Liter Treibstoff.

100 ml des zu prüfenden Vergaserkraftstoffes wurden mit 10 ml einer Mischung aus 5 ml Salzsäure (10 gew.-%ig) und 5 ml Ethanol kräftig geschüttelt (5 Minuten auf einem Schüttelgerät). Dabei färbte sich die alkoholisch-wäßrige Phase deutlich erkennbar rot. Nach kurzem Stehen, nachdem sich beide Phasen getrennt hatten, konnte man die rot gefärbte Schicht farbmetrisch gegen eine Lösung bekannter Konzentration vergleichen und so den Farbstoffgehalt quantitativ ermitteln. Auf diese Weise ließ sich auch noch eine Vermischung des markierten Vergaserkraftstoffes mit der 20-fachen Menge an unmarkiertem Benzin einwandfrei nachweisen (Konzentration an Farbstoff: 0,45 ppm).

Beispiel 21 (Anwendung)

Leichtes Heizöl mit honiggelber Eigenfarbe wurde mit einen 60 gew.-%igen Lösung des Farstoffs gemäß Beispiel Nr. 1 in Xylol markiert.

Der Zusatz an obiger Lösung betrug 20 ppm. Schüttelte man 100 ml dieses gelb gefärbten Heizöls mit 5 ml 10 gew.-%iger Salzsäure, so färbte sich die wäßrige Phase rot.

**Patentansprüche**

**Patentansprüche für folgende Vertragsstaaten : AT, BE, CH, DE, FR, GB, IT, LI, NL, SE**

**1.** Azofarbstoffe der Formel I

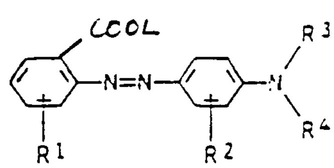

(I).

in der

| | |
|---|---|
| $R^1$ und $R^2$ | gleich oder verschieden sind und unabhängig voneinander jeweils Wasserstoff, $C_1$-$C_4$-Alkyl oder $C_1$-$C_4$-Alkoxy, |
| $R^3$ | Wasserstoff oder $C_1$-$C_8$-Alkyl, das gegebenenfalls durch Hydroxy substituiert ist und durch 1 bis 3 Sauerstoffatome in Etherfunktion unterbrochen sein kann, |
| $R^4$ | $C_1$-$C_8$-Alkyl, das gegebenenfalls durch Hydroxy substituiert ist und durch 1 bis 3 Sauerstoffatome in Etherfunktion unterbrochen sein kann, und |
| L | Wasserstoff oder $C_1$-$C_8$-Alkyl, das gegebenenfalls durch Hydroxy substituiert ist und |

durch 1 bis 3 Sauerstoffatome in Etherfunktion unterbrochen sein kann, bedeuten,
mit der Maßgabe, daß mindestens einer der Reste $R^3$, $R^4$ oder L durch Hydroxy substituiert ist.

**2.** Azofarbstoffe nach Anspruch 1, dadurch gekennzeichnet, daß
$R^1$ Wasserstoff,
$R^2$ Wasserstoff, Methyl oder Methoxy,
$R^3$ $C_1$-$C_4$-Alkyl und
$R^4$ $C_2$-$C_4$-Alkyl, das durch Hydroxy substituiert ist, bedeuten.

**3.** Mineralöle, enthaltend einen oder mehrere Azofarbstoffe der Formel I gemäß Anspruch 1.

**4.** Verwendung der Azofarbstoffe gemäß Anspruch 1 zum Markieren von Mineralölen.

**Patentansprüche für folgenden Vertragsstaat : ES**

**1.** Verfahren zur Herstellung von Azofarbstoffen der Formel I

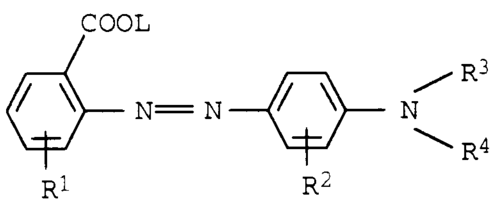

(I),

in der
$R^1$ und $R^2$ gleich oder verschieden sind und unabhängig voneinander jeweils Wasserstoff, $C_1$-$C_4$-Alkyl oder $C_1$-$C_4$-Alkoxy,
$R^3$ Wasserstoff oder $C_1$-$C_8$-Alkyl, das gegebenenfalls durch Hydroxy substituiert ist und durch 1 bis 3 Sauerstoffatome in Etherfunktion unterbrochen sein kann,
$R^4$ $C_1$-$C_8$-Alkyl, das gegebenenfalls durch Hydroxy substituiert ist und durch 1 bis 3 Sauerstoffatome in Etherfunktion unterbrochen sein kann, und
L Wasserstoff oder $C_1$-$C_8$-Alkyl, das gegebenenfalls durch Hydroxy substituiert ist und durch 1 bis 3 Sauerstoffatome in Etherfunktion unterbrochen sein kann, bedeuten,

mit der Maßgabe, daß mindestens einer der Reste $R^3$, $R^4$ oder L durch Hydroxy substituiert ist, dadurch gekennzeichnet, daß man ein Aminobenzoesäurederivat der Formel II

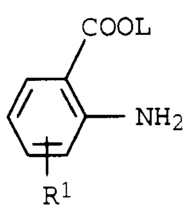

(II),

in der L und $R^1$ jeweils die obengenannte Bedeutung besitzen, diazotiert und anschließend mit einem N-Alkylanilin der Formel III

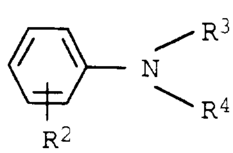

(III),

in der $R^2$, $R^3$ und $R^4$ jeweils die obengenannte Bedeutung besitzen, kuppelt.

**2.** Verfahren nach Anspruch 1, dadurch gekennzeichnet, daß
$R^1$ Wasserstoff,

$R^2$ Wasserstoff, Methyl oder Methoxy,
$R^3$ $C_1$-$C_4$-Alkyl und
$R^4$ $C_2$-$C_4$-Alkyl, das durch Hydroxy substituiert ist, bedeuten.

**3.** Mineralöle, enthaltend einen oder mehrere Azofarbstoffe der Formel I gemäß Anspruch 1.

**4.** Verwendung der Azofarbstoffe gemäß Anspruch 1 zum Markieren von Mineralölen.

**Claims**

**Claims for the following Contracting States : AT, BE, CH, DE, FR, GB, IT, LI, NL, SE**

**1.** An azo dye of the formula I

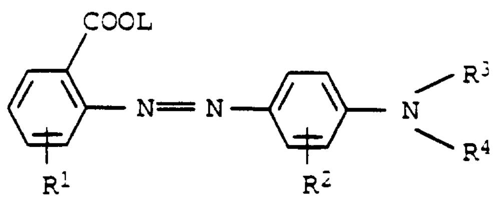
**(I)**

where
$R^1$ and $R^2$ are identical or different and each is independently of the other hydrogen, $C_1$-$C_4$-alkyl or $C_1$-$C_4$-alkoxy,
$R^3$ is hydrogen or $C_1$-$C_8$-alkyl which may be substituted by hydroxyl and interrupted by from 1 to 3 oxygen atoms in ether function,
$R^4$ is $C_1$-$C_8$-alkyl which may be substituted by hydroxyl and interrupted by from 1 to 3 oxygen atoms in ether function, and
L is hydrogen or $C_1$-$C_8$-alkyl which may be substituted by hydroxyl and interrupted by from 1 to 3 oxygen atoms in ether function,
with the proviso that at least one of $R^3$, $R^4$ and L is substituted by hydroxyl.

**2.** An azo dye as claimed in claim 1, wherein
$R^1$ is hydrogen,
$R^2$ is hydrogen, methyl or methoxy,
$R^3$ is $C_1$-$C_4$-alkyl, and
$R^4$ is $C_2$-$C_4$-alkyl which is substituted by hydroxyl.

**3.** A mineral oil containing one or more azo dyes of the formula I as set forth in claim 1.

**4.** The use of an azo dye as claimed in claim 1 for marking a mineral oil.

**Claims for the following Contracting State : ES**

**1.** A process for preparing an azo dye of the formula I

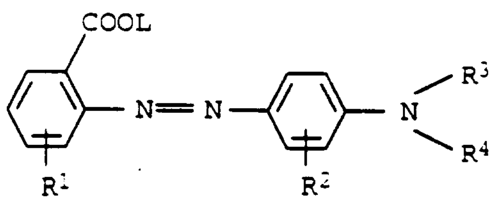
**(I)**

where
$R^1$ and $R^2$ are identical or different and each is independently of the other hydrogen, $C_1$-$C_4$-alkyl or $C_1$-$C_4$-alkoxy,

$R^3$ is hydrogen or $C_1$-$C_8$-alkyl which may be substituted by hydroxyl and interrupted by from 1 to 3 oxygen atoms in ether function,

$R^4$ is $C_1$-$C_8$-alkyl which may be substituted by hydroxyl and interrupted by from 1 to 3 oxygen atoms in ether function, and

L is hydrogen or $C_1$-$C_8$-alkyl which may be substituted by hydroxyl and interrupted by from 1 to 3 oxygen atoms in ether function,

with the proviso that at least one of $R^3$, $R^4$ and L is substituted by hydroxyl, which comprises diazotizing an aminobenzoic acid derivative of the formula II

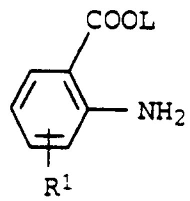

(II)

where L and $R^1$ are each as defined above, and coupling the diazonium salt with an N-alkylaniline of the formula III

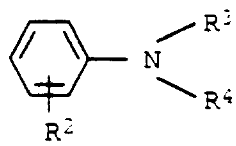

(III)

where $R^2$, $R^3$ and $R^4$ are each as defined above.

**2.** A process as claimed in claim 1, wherein

$R^1$ is hydrogen,
$R^2$ is hydrogen, methyl or methoxy,
$R^3$ is $C_1$-$C_4$-alkyl, and
$R^4$ is $C_2$-$C_4$-alkyl which is substituted by hydroxyl.

**3.** A mineral oil containing one or more azo dyes of the formula I as set forth in claim 1.

**4.** The use of an azo dye as claimed in claim 1 for marking a mineral oil.

## Revendications

**Revendications pour les Etats contractants suivants : AT, BE, CH, DE, FR, GB, IT, LI, NL, SE**

**1.** Colorants azoïques de la formule I :

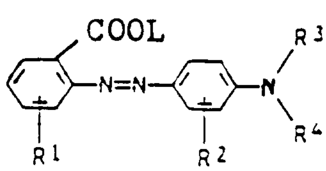

(I)

dans laquelle

$R^1$ et $R^2$ sont identiques ou différents et représentent, chacun indépendamment l'un de l'autre, un atome d'hydrogène, un radical alkyle en $C_1$ à $C_4$, ou alcoxy en $C_1$ à $C_4$,

$R^3$ représente un atome d'hydrogène ou un radical alkyle en $C_1$ à $C_8$, à substitution hydroxylique éventuelle et qui peut être interrompu par de 1 à 3 atomes d'oxygène en fonction éther,

$R^4$ représente un radical alkyle en $C_1$ à $C_8$ à substitution hydroxylique éventuelle et qui peut être interrompu par de 1 à 3 atomes d'oxygène en fonction éther, et

L représente un atome d'hydrogène ou un radical alkyle en $C_1$ à $C_8$ à substitution hydroxylique éventuelle et qui peut être interrompu par de 1 à 3 atomes d'oxygène en fonction éther,

avec la condition qu'au moins l'un des symboles $R^3$, $R^4$ ou L soit substitué par des radicaux hydroxyle.

**2.** Colorants azoïques suivant la revendication 1, caractérisés en ce que
$R^1$ représente un atome d'hydrogène,
$R^2$ représente un atome d'hydrogène, le radical méthyle ou méthoxy,
$R^3$ représente un radical alkyle en $C_1$ à $C_4$, et
$R^4$ représente un radical alkyle en $C_2$ à $C_4$ à substitution hydroxylique éventuelle.

**3.** Huiles minérales contenant un ou plusieurs colorants azoïques de la formule I suivant la revendication 1.

**4.** Utilisation de colorants azoïques suivant la revendication 1 pour le marquage d'huiles minérales.

**Revendications pour l'Etat contractant suivant : ES**

**1.** Procédé de fabrication de colorants azoïques de la formule I :

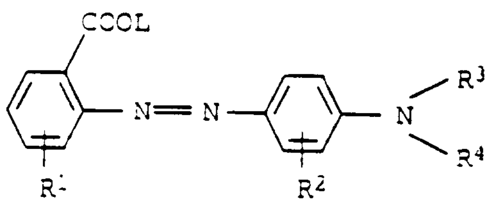

(I)

dans laquelle

$R^1$ et $R^2$ sont identiques ou différents et représentent, chacun indépendamment l'un de l'autre, un atome d'hydrogène, un radical alkyle en $C_1$ à $C_4$, ou alcoxy en $C_1$ à $C_4$,

$R^3$ représente un atome d'hydrogène ou un radical alkyle en $C_1$ à $C_8$, à substitution hydroxylique éventuelle et qui peut être interrompu par de 1 à 3 atomes d'oxygène en fonction éther,

$R^4$ représente un radical alkyle en $C_1$ à $C_8$ à substitution hydroxylique éventuelle et qui peut être interrompu par de 1 à 3 atomes d'oxygène en fonction éther, et

L représente un atome d'hydrogène ou un radical alkyle en $C_1$ à $C_8$ à substitution hydroxylique éventuelle et qui peut être interrompu par de 1 à 3 atomes d'oxygène en fonction éther,

avec la condition qu'au moins l'un des symboles $R^3$, $R^4$ ou L soit substitué par des radicaux hydroxyle, caractérisé en ce que l'on diazote un dérivé de l'acide aminobenzoïque de la formule II :

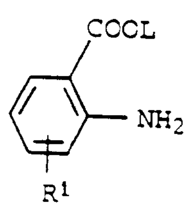

(II)

dans laquelle L et $R^1$ possèdent les significations qui leur ont été attribuées ci-dessus et on copule ensuite le produit obtenu avec une N-alkylaniline de la formule III :

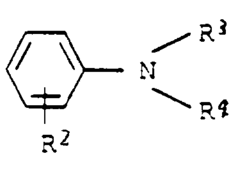

(III)

dans laquelle les symboles $R^1$, $R^3$ et $R^4$ possèdent chacun les significations qui leur ont été précédemment attribuées.

2. Procédé suivant la revendication 1, caractérisé en ce que
   $R^1$ représente un atome d'hydrogène,
   $R^2$ représente un atome d'hydrogène, le radical méthyle ou méthoxy,
   $R^3$ représente un radical alkyle en $C_1$ à $C_4$, et
   $R^4$ représente un radical alkyle en $C_2$ à $C_4$ à substitution hydroxylique éventuelle.

3. Huiles minérales qui contiennent un ou plusieurs colorants azoïques de la formule I suivant la revendication 1.

4. Utilisation des colorants azoïques suivant la revendication 1 en vue du marquage d'huiles minérales.